# EUROPÄISCHE PATENTANMELDUNG

(11) **EP 2 554 855 A2**
(43) Veröffentlichungstag der Anmeldung: **06.02.2013**
(21) Anmeldenummer: 12005626.2
(22) Anmeldetag: 02.08.2012
(51) Int. Cl.: F16B 21/04, F16M 13/02, G08B 17/10

(54) **Haltevorrichtung zur Halterung von einem Gegenstand, insbesondere von einem Brandmelder, an einem Untergrund**

(30) Priorität: 05.08.2011 DE 202011104096 U
(71) Anmelder: Hoseit, Winrich, 50996 Köln (DE)
(72) Erfinder: Hoseit, Winrich, 50996 Köln (DE)
(74) Vertreter: Kirschner, Sebastian

(57) **Zusammenfassung**

Die Erfindung betrifft eine Haltevorrichtung (1) zur Halterung von einem Gegenstand (2), insbesondere von einem Brandmelder (3), an einem Untergrund (4), insbesondere einer Zimmerdecke (5), mit einem Aufnahmeteil (6) und mit einem Eingriffsteil (7), wobei das Aufnahmeteil (6) eine Aufnahme (8) aufweist, wobei das Eingriffsteil (7) zum mindestens teilweisen Eingriff in die Aufnahme (8) ausgebildet ist, und wobei das Aufnahmeteil (6) und das Eingriffsteil (7) über eine Magnetverbindung (9) lösbar miteinander verbunden oder verbindbar sind.

Die Handhabung der Haltevorrichtung (1) ist dadurch verbessert, dass die Aufnahme (8) rotationssymmetrisch ausgebildet ist, wobei das Eingriffsteil (7) in unterschiedlichen Rotationslagen in die Aufnahme (8) einsetzbar ist.

## Beschreibung

Die Erfindung betrifft eine Haltevorrichtung zur Halterung von einem Gegenstand, insbesondere von einem Brandmelder, an einem Untergrund, insbesondere einer Zimmerdecke, mit einem Aufnahmeteil und mit einem Eingriffsteil, wobei das Aufnahmeteil eine Aufnahme aufweist und das Eingriffsteil zum mindestens teilweisen Eingriff in die Aufnahme ausgebildet ist, wobei das Aufnahmeteil und das Eingriffsteil über eine Magnetverbindung lösbar miteinander verbunden oder verbindbar sind.

Die europäische Produktnorm DIN EN 14604 legt Anforderungen, Prüfverfahren sowie Leistungskriterien für Brandmelder fest. Brandmelder sind für Anwendungen in Haushalten oder für vergleichbare Anwendungen in Wohnbereichen vorgesehen. Um der Norm DIN EN 14604 zu genügen, muss die Haltevorrichtung für den Brandmelder so ausgestaltet sein, dass sich der Brandmelder durch eine seitliche Schlageinwirkung nicht ohne weiteres vom Untergrund, beispielsweise der Zimmerdecke, lösen kann.

Aus dem Stand der Technik sind unterschiedliche Haltevorrichtungen zur Halterung von Brandmeldern bekannt:

Aus der gattungsgemäßen DE 20 2004 019 995 U1 ist eine Haltevorrichtung für einen Brandmelder bekannt. Der Brandmelder weist ein Eingriffsteil in Form einer Montageplatte auf. Die Montageplatte ist mit einer Klebeschicht am Untergrund befestigt. Das Gehäuse des Brandmelders weist eine Aufnahme auf und dient als entsprechendes Aufnahmeteil, in das die Montageplatte als Eingriffsteil eingreift. Die Montageplatte und das Gehäuse sind über eine Magnetverbindung lösbar miteinander verbunden.

Aus der DE 20 2009 003 064 U1 ist eine weitere Haltevorrichtung für einen Brandmelder bekannt. Die Haltevorrichtung weist einen stoßgesicherten Schnellverschluss auf. An einer Zimmerdecke- dem Untergrund- ist ein Aufnahmeteil mittels einer Klebeverbindung befestigt. Das Aufnahmeteil weist einen aufgewölbten Rand auf, der eine Aufnahme für ein brandmelderseitiges Eingriffsteil begrenzt. Das Eingriffsteil ist als Doppelkurvenscheibe ausgebildet. Die Doppelkurvenscheibe ist über ein Klebemittel an einem Gehäuse des Brandmelders befestigt. Die Doppelkurvenscheibe wird bei der Montage in die Aufnahme eingesetzt und dann derart gedreht, dass die Doppelkurvenscheibe unter mehreren, am Aufnahmeteil ausgebildeten Haltezungen zu liegen kommt. Diese Haltezungen verhindern, dass die Kurvenscheibe ohne Drehbewegung aus der Ausnahme herausgezogen werden kann.

Die eingangs genannten Haltevorrichtungen sind noch nicht optimal ausgebildet. Im Stand der Technik kann das Eingriffsteil jeweils nur in bestimmten Rotationslagen in die Aufnahme eingesetzt werden. Hierdurch ist die Montage des Brandmelders nur umständlich zu realisieren.

Der Erfindung liegt daher die Aufgabe zugrunde, eine Haltevorrichtung derart auszugestalten und weiterzubilden, so dass die Handhabung der Haltevorrichtung verbessert ist.

Diese der Erfindung zugrunde liegende Aufgabe wird nun dadurch gelöst, dass die Aufnahme rotationssymmetrisch ausgebildet ist, wobei das Eingriffsteil in unterschiedlichen Rotationslagen in die Aufnahme einsetzbar ist. Dies hat den Vorteil, dass die Handhabung der Haltevorrichtung und damit die Montage eines Gegenstandes, insbesondere eines Brandmelders, vereinfacht ist. Ferner ist hierdurch sichergestellt, dass der Brandmelder sich nicht von der Zimmerdecke löst, egal aus welcher seitlichen Richtung ein Schlag auf den Brandmelder einwirkt. Die Aufnahme kann insbesondere im Wesentlichen zylindrisch ausgebildet sein. Alternativ kann die Aufnahme die Form eines Kegelstumpfes aufweisen. Das Aufnahmeteil kann insbesondere als Dose mit einem zylindrischen Mantel ausgebildet sein. Das Eingriffsteil kann derart ausgestaltet sein, so dass das Eingriffsteil mit nur wenig seitlichem Spiel in der Aufnahme anordbar ist. In bevorzugter Ausgestaltung sind das Aufnahmeteil und das Eingriffsteil über eine Klemmverbindung miteinander verbunden oder verbindbar. Das Eingriffsteil kann sich dabei klemmend an dem Mantel des Aufnahmeteils im montierten Zustand abstützen. Dies hat den Vorteil, dass auch bei einer seitlichen Schlageinwirkung auf den Brandmelder das Eingriffsteil funktional wirksam seitlich abgestützt ist. Durch die Klemmverbindung ist zusätzlich zu den wirkenden Magnetkräften das Eingriffsteil sicher in der Aufnahme gehalten. In bevorzugter Ausgestaltung weist das Eingriffsteil eine Einführfase auf. Das Aufnahmeteil kann in alternativer Ausgestaltung oder zusätzlich eine Einführfase aufweisen. Die Einführfase erstreckt sich insbesondere vollumfänglich und schräg nach innen, so dass beim Einsetzten des Eingriffsteils in die Aufnahme die Einführfase das Eingriffsteil relativ zur Aufnahme zentriert. Dies erleichtert die Montage des Eingriffsteils. Der Mantel des Eingriffsteils weist insbesondere die Einführfase und anschließend daran einen sich im wesentlichen zylindrisch erstreckenden Mantelbereich auf. An den Mantelbereich schließt sich vzw. der Boden an. Die Einführfase dient zur Zentrierung des Eingriffsteils und der zylindrische Mantelbereich dient im wesentlichen dazu, eine Klemmverbindung zu dem in bevorzugter Ausgestaltung entsprechend zylindrisch ausgebildeten Mantel der Aufnahme herzustellen. Die Einführfase kann in besonders einfacher Herstellung dadurch gebildet sein, dass ein zunächst im wesentlichen zylindrischer Mantel der Dose an seiner freien Kante mit mehreren Schlitzen versehen wird, so dass einzelne federnde Zungen entstehen, die entsprechend nach innen biegbar sind, so dass die nach innen gebogenen Zungen im wesentlichen die Einführfase bilden. Insbesondere ist das Aufnahmeteil als Dose, insbesondere als magnetische oder magnetisierbare Dose ausgebildet. Die Dose kann bspw. aus Eisen bestehen. Das Eingriffsteil weist mehrere Magnete bzw. Permanentmagnete auf. Die Magnete können als Neodym-Magnete ausgebildet sein. Das Eingriffsteil kann mehrere Begrenzungsbereiche aufweisen, mit dem das Eingriffsteil seitlich an der Innenumfangsfläche der Aufnahme abstützbar ist. Diese Begrenzungsbereiche können bspw. durch die Magnete gebildet sein. Insbesondere können drei Magnete gleichmäßig beabstandet zueinander angeordnet sein. Die Magnete können dabei jeweils um 120° versetzt zueinander angeordnet sein. Vzw. weist das Eingriffsteil eine ebenfalls rotationssymmetrische Außenumfangsfläche auf, die als Begrenzungsbereich dient. Das Eingriffsteil ist vzw. als Dose ausgebildet, wobei diese Dose kleiner ist als die Dose des Aufnahmeteils. Auf einem Boden der Dose könnten die Magnete befestigt sein. Die beiden Dosen können nun mit entsprechenden Klebemitteln an dem Untergrund, bspw. an der Zimmerdecke und an dem Brandmelder, insbesondere an einer Rückseite des Brandmelders befestigt werden. Die Magnetverbindung ist hier durch die Magnete gebildet, wobei durch drei Magnete eine gleichmäßige magnetische Haftkraft zwischen der kleinen Dose bzw. dem Eingriffsteil und der großen Dose bzw. dem Aufnahmeteil vermittelbar ist. Die Handhabung dieser erfindungsgemäßen Haltevorrichtung ist verbessert. Die eingangs genannten Nachteile sind daher vermieden und entsprechende Vorteile erzielt.

Es gibt nun eine Vielzahl von Möglichkeiten, die erfindungsgemäße Haltevorrichtung in vorteilhafter Weise auszugestalten und weiterzubilden. Hierzu darf auf die dem Patentanspruch 1 nachgeordneten Patentansprüche verwiesen werden. Im Folgenden wird eine bevorzugte Ausgestaltung der Erfindung anhand der Zeichnung und der dazugehörigen Beschreibung erläutert.

In der Zeichnung zeigt:
- Fig. 1: in einer schematischen, perspektivischen Darstellung eine Haltevorrichtung, eine Zimmerdecke und einen Brandmelder, wobei die Einzelteile der Haltevorrichtung in Art einer Explosionsdarstellung räumlich voneinander getrennt sind, und
- Fig. 2: in einer schematischen, geschnittenen Seitenansicht die Haltevorrichtung, wobei ein Eingriffsteil eine Einführfase aufweist.

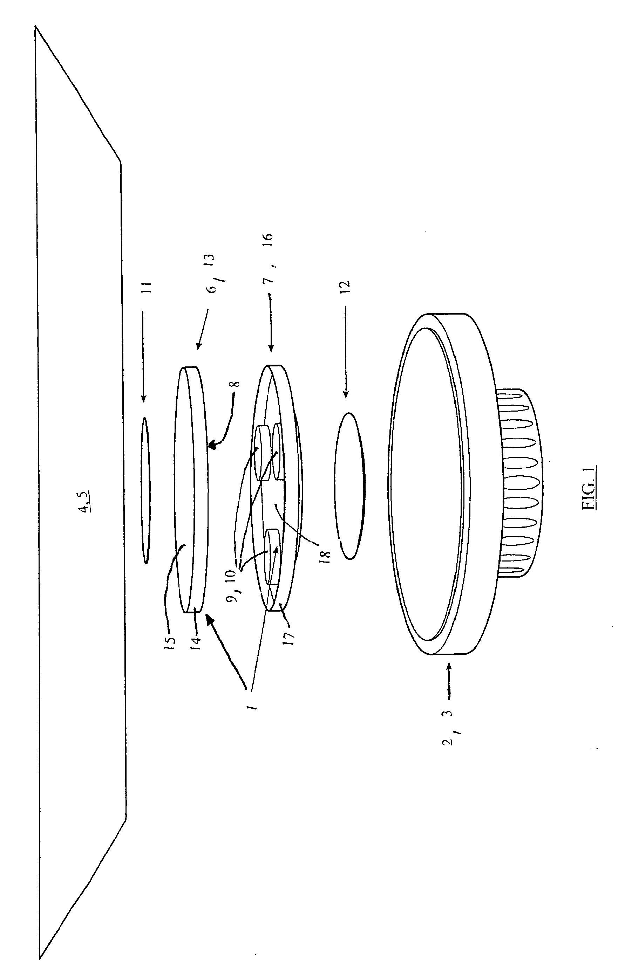

In Fig. 1 ist eine Haltevorrichtung 1 gut zu erkennen. Die Haltevorrichtung 1 dient zur Halterung von einem Gegenstand 2. Die Haltevorrichtung 1 dient insbesondere zur Halterung von einem Brandmelder 3. Der Gegenstand 2 bzw. der Brandmelder 3 wird durch die Haltevorrichtung 1 an einem Untergrund 4 gehalten. Der Untergrund 4 ist hier durch eine Zimmerdecke 5 eines Wohnraumes oder eines sonstigen Gebäudes gebildet. Die Haltevorrichtung 1 ist nicht auf die Halterung von Gegenständen 2 an einer Zimmerdecke 5 beschränkt. Die Haltevorrichtung 1 kann einen Gegenstand 2 an einer aufragenden Wand und/oder an einem sonstigen Untergrund 4 halten.

Die Haltevorrichtung 1 weist ein Aufnahmeteil 6 und ein Eingriffsteil 7 auf.

Das Aufnahmeteil 6 ist am Untergrund 4 befestigbar. Das Eingriffsteil 7 ist am Gegenstand 2 befestigbar.

Das Aufnahmeteil 6 weist eine Aufnahme 8 auf, wobei das Eingriffsteil 7 zum zumindest teilweisen Eingriff in die Aufnahme 8 ausgebildet ist. Das Eingriffsteil 7 weist insbesondere einen kleineren Durchmesser als der Durchmesser der Aufnahme 8 auf. Die Höhe des Eingriffsteils 7 ist vzw. derart bemessen, dass das Eingriffsteil 7 im Wesentlichen vollständig in die Aufnahme 8 eingreift.

Das Aufnahmeteil 6 und das Eingriffsteil 7 sind über eine Magnetverbindung 9 lösbar miteinander verbunden oder verbindbar. Die Magnetverbindung 9 weist insbesondere mehrere Magneten 10 auf. Die Magneten 10 sind hier insbesondere als Teil des Eingriffsteils 7 ausgebildet. Das Aufnahmeteil 6 weist einen entsprechenden magnetischen oder magnetisierbaren Werkstoff auf, so dass zwischen den Magneten 10 und dem Aufnahmeteil 6 eine entsprechende magnetische Haftkraft erzeugbar ist. Der Werkstoff ist vzw. ferromagnetisch. Die Magnete 10 können in alternativer Ausgestaltung dem Aufnahmeteil 6 zugeordnet sein. Das Eingriffsteil 7 kann ebenfalls ein magnetisches oder magnetisierbares Material aufweisen.

Die eingangs genannten Nachteile sind nun dadurch vermieden, dass die Aufnahme 8 rotationssymmetrisch ausgebildet ist, wobei das Eingriffsteil 7 in unterschiedlichen Rotationslagen in die Aufnahme 8 einsetzbar ist.

Dies hat den Vorteil, dass die Handhabung der Haltevorrichtung 1 verbessert ist. Der Brandmelder 3 bzw. der Gegenstand 2 muss bzgl. der Rotationslage um die Hochachse nicht mehr eine bestimmte Lage einnehmen, sondern kann in allen Rotationslagen um die Hochachse bzw. Flächennormale mit dem Eingriffsteil 7 in die Aufnahme 8 eingreifen. Die Hochachse erstreckt sich senkrecht zum Untergrund.

In der dargestellten Ausgestaltung ist das Eingriffsteil 7 dem Gegenstand 2, hier dem Brandmelder 3 zugeordnet. Das Aufnahmeteil 6 ist dem Untergrund 4 zugeordnet. Es ist ebenfalls möglich, dass das Aufnahmeteil 4 dem Gegenstand 2 bzw. dem Brandmelder 3 und das Eingriffsteil 7 dem Untergrund 4 zugeordnet ist.

Das Aufnahmeteil 6 ist über eine Klebeschicht 11, 12 an dem Untergrund 4 bzw. der Zimmerdecke 5 befestigt. Die Klebeschicht 11, 12 kann als Klebepad ausgebildet sein. Zur Montage des Gegenstandes 2 mittels der Haltevorrichtung 1 wird die Klebeschicht 11 auf dem Aufnahmeteil 6 aufgebracht und am Untergrund 4 befestigt. Die Klebeschichten 11, 12 können insbesondere als doppelseitiges Klebeband oder dgl. ausgebildet sein.

Das Eingriffsteil 7 ist über eine Klebeschicht 12 mit dem Gegenstand 2, insbesondere dem Brandmelder 3 verbunden. Die Klebeschicht 12 ist dabei an einer nicht näher bezeichneten, insbesondere ebenen Rückseite des Brandmelders 3 angebracht. Über die Klebeschicht 12 ist das Eingriffsteil 7 mit dem Brandmelder 3 verbunden.

In besonders bevorzugter Ausgestaltung ist das Aufnahmeteil 6 als Dose 13 ausgebildet. Die Dose 13 weist einen im Wesentlichen zylindrischen Mantel 14 auf. Die Dose 13 weist ferner einen vzw. kreisförmigen Boden oder ringförmigen Boden 15 auf. Mantel 14 und Boden 15 sind einstückig ausgebildet. Die Dose 13 bildet eine Baueinheit. Die Klebeschicht 11, 12 ist an der Außenseite des Bodens 15, 18 entsprechend angeordnet.

In bevorzugter Ausgestaltung ist das Eingriffsteil 7 als kleinere Dose 16 ausgebildet. Die Dose 16 weist dabei einen kleineren Durchmesser als die Dose 13 auf. Die Aufnahme 8 ist seitlich durch den Mantel 14 der Dose 13 begrenzt. Der Mantel 17 ist vzw. ebenfalls im Wesentlichen zylindrisch ausgebildet. Der Boden 18 ist ebenfalls kreisförmig ausgebildet. In alternativer Ausgestaltung kann der Boden 18 ringförmig ausgebildet sein. Die Magnete 9, 10 sind innerhalb der Dose 13 und/oder der Dose 16 befestigt. Die Magnete 10 sind vzw. am Boden der kleineren Dose 16 befestigt. Vzw. sind drei Magnete 9 vorgesehen, wobei die drei Magnete 9 jeweils im Wesentlichen gleichmäßig beabstandet sind. Die drei Magnete 9 können insbesondere im gleichen Abstand zum Mittelpunkt der Dose 16 angeordnet sein. Die Magnete sind vorzugsweise um im wesentlichen 120°C relativ im Mittelpunkt der Dose 13 bzw. 16 angeordnet. Die drei Magnete 9 können in alternativer Ausgestaltung in der kleineren Dose 13 bzw. im Aufnahmeteil 6 angeordnet sein.

Im montierten Zustand ist die Haltevorrichtung 1 gegen seitliche Stöße gesichert, da der Mantel 17 der Dose 16 und der Mantel 14 der Dose 13 klemmend zueinander angeordnet ist und bei einem seitlichen Schlag so das Eingriffsteil 7 innerhalb der Aufnahme 8 abgestützt ist. Zwischen der Dose 13 und 16 kann alternativ das seitliche Spiel kleiner als 5 Millimeter, vzw. kleiner als 3 Millimeter sein.

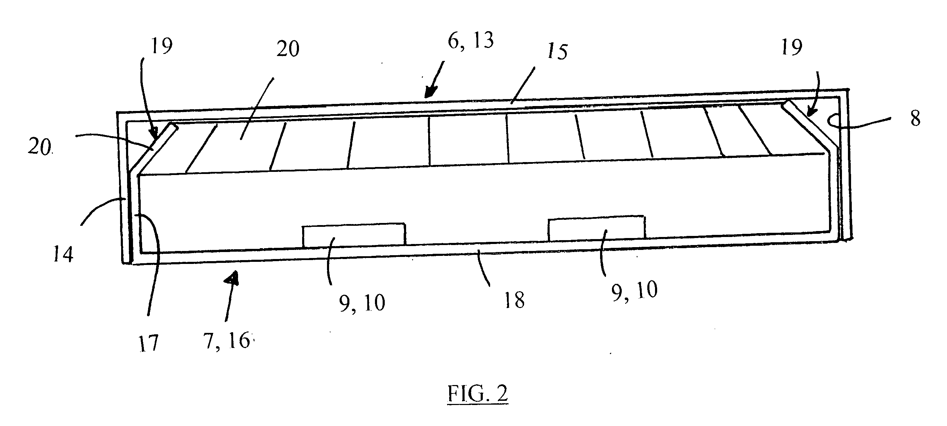

Im folgenden darf auf Fig. 2 Bezug genommen werden.

In besonders bevorzugter Ausgestaltung sind das Eingriffsteil 7 und das Aufnahmeteil 6 durch eine Klemmverbindung miteinander verbunden bzw. miteinander verbindbar. Insbesondere stützt sich der Mantel 17 des Eingriffsteils 7 zumindest abschnittsweise an der Innenumfangsfläche des Mantels 14 des Aufnahmeteils 6 klemmend ab.

In besonders bevorzugter Ausgestaltung weist das Eingriffsteil 7 eine Einführfase 19 auf. Die Einführfase 19 erstreckt insbesondere vollumfänglich und schräg nach innen. Hierdurch erfolgt bei der Montage des Einführteils 7 eine Zentrierung. Die Handhabung des Eingriffsteils 7 ist erleichtert. Die Herstellung der Einführfase 19 ist auf einfache Art und Weise dadurch möglich, dass die Einführfase 19 durch mehrere Zungen 20 gebildet ist, wobei die Zungen 20 durch entsprechende Schlitze (nicht näher bezeichnet) voneinander beabstandet wird. Die Zungen 20 sind nun derart schräg nach innen gebogen, so dass Sie die Einführfase 19 bilden. Die Zungen 20 sind teilweise überlappend angeordnet. Die beiden Dosen 13, 16 können dabei aus einem metallischen Material oder einem Kunststoff bestehen bzw. hergestellt sein.

Die Zungen 20 und damit die Einführfase 19 sind in Fig. 1 nicht dargestellt.

Die eingangs genannten Nachteile sind vermieden, entsprechende Vorteile sind erzielt.

### Bezugszeichenliste:

- 1: Haltevorrichtung
- 2: Gegenstand
- 3: Brandmelder
- 4: Untergrund
- 5: Zimmerdecke
- 6: Aufnahmeteil
- 7: Eingriffsteil
- 8: Aufnahme
- 9: Magnetverbindung
- 10: Magnet
- 11: Klebeschicht
- 12: Klebeschicht
- 13: Dose
- 14: Mantel
- 15: Boden
- 16: Dose
- 17: Mantel
- 18: Boden
- 19: Einführfase
- 20: Zunge

## Patentansprüche

1. Haltevorrichtung (1) zur Halterung von einem Gegenstand (2), insbesondere von einem Brandmelder (3), an einem Untergrund (4), insbesondere einer Zimmerdecke (5), mit einem Aufnahmeteil (6) und mit einem Eingriffsteil (7), wobei das Aufnahmeteil (6) eine Aufnahme (8) aufweist, wobei das Eingriffsteil (7) zum mindestens teilweisen Eingriff in die Aufnahme (8) ausgebildet ist, und wobei das Aufnahmeteil (6) und das Eingriffsteil (7) über eine Magnetverbindung (9) lösbar miteinander verbunden oder verbindbar sind, **dadurch gekennzeichnet, dass** die Aufnahme (8) rotationssymmetrisch ausgebildet ist, wobei das Eingriffsteil (7) in unterschiedlichen Rotationslagen in die Aufnahme (8) einsetzbar ist.

2. Haltevorrichtung nach Anspruch 1, **dadurch gekennzeichnet, dass** das Aufnahmeteil (6) als Dose (13) ausgebildet ist, wobei die Dose (13) einen zumindest teilweise zylindrischen Mantel (14) und einen Boden (15) aufweist.

3. Haltevorrichtung nach Anspruch 1 oder 2, **dadurch gekennzeichnet, dass** das Eingriffsteil (7) als Dose (16) mit einem Mantel (17) und mit einem Boden (18) ausgebildet ist, wobei der Mantel (17) des Eingriffsteils (7) und/oder der Mantel (14) oder Dose (13) eine Einführfase (19) aufweist.

4. Haltevorrichtung nach einem der vorstehenden Ansprüche, **dadurch gekennzeichnet, dass** das Aufnahmeteil (6) und das Eingriffsteil (7) über eine Klemmverbindung verbunden oder verbindbar sind.

5. Haltevorrichtung nach einem vorstehenden Ansprüche, **dadurch gekennzeichnet, dass** der Mantel (14, 17) des Eingriffsteils (7) zumindest teilweise zylindrisch ausgebildet ist, wobei die Einführfase (19) durch mehrere, schräg nach innen ragende Zungen (20) gebildet ist.

6. Haltevorrichtung nach einem der vorstehenden Ansprüche, **dadurch gekennzeichnet, dass** das Aufnahmeteil (6) am Untergrund (4) befestigbar ist.

7. Haltevorrichtung nach einem der vorstehenden Ansprüche, **dadurch gekennzeichnet, dass** das Eingriffsteil (7) am Gegenstand (2) befestigbar ist.

8. Haltevorrichtung nach einem der vorstehenden Ansprüche, **dadurch gekennzeichnet, dass** das Aufnahmeteil (6) mittels einer Klebeschicht (11) am Untergrund (4) befestigbar bzw. befestigt ist.

9. Haltevorrichtung nach einem der vorstehenden Ansprüche, **dadurch gekennzeichnet, dass** das Eingriffsteil (7) mittels einer Klebeschicht (12) an dem Gegenstand (2), insbesondere an dem Brandmelder (3) befestigbar ist.

10. Haltevorrichtung nach einem der vorstehenden Ansprüche, **dadurch gekennzeichnet, dass** die Klebeschicht (11, 12) auf der Außenseite des Bodens (15, 18) angebracht ist.

11. Haltevorrichtung nach einem der vorstehenden Ansprüche, **dadurch gekennzeichnet, dass** die Magnetverbindung (9) mindestens einen Magneten (10), insbesondere mehrere Magnete (10) aufweist, wobei das Aufnahmeteil (6) und/oder das Eingriffsteil (7) ein magnetisches oder magnetisierbares Material aufweist.

12. Haltevorrichtung nach einem der vorstehenden Ansprüche, **dadurch gekennzeichnet, dass** die Magnete (9, 10) innerhalb der Dose (13) und/oder der Dose (16) befestigt sind.

13. Haltevorrichtung nach einem der vorstehenden Ansprüche, **dadurch gekennzeichnet, dass** mindestens ein Magnet (9), insbesondere mehrere Magnete (9) am Boden (18) der kleineren Dose (16) befestigt, insbesondere angeklebt sind.

14. Haltevorrichtung nach einem der vorstehenden Ansprüche, **dadurch gekennzeichnet, dass** drei Magnete (9) vorgesehen sind, wobei die Magnete (9) im Wesentlichen gleichmäßig zueinander beabstandet sind.

15. Haltevorrichtung nach einem der vorstehenden Ansprüche, **dadurch gekennzeichnet, dass** die Magnete (9) um im Wesentlichen 120° relativ zum Mittelpunkt der Dose (13 bzw. 16) angeordnet sind.
